Europäisches Patentamt

European Patent Office

Office européen des brevets

(19)

(11) Veröffentlichungsnummer: **0 184 667 B1**

(12) # EUROPÄISCHE PATENTSCHRIFT

(45) Veröffentlichungstag der Patentschrift: 15.05.91

(51) Int. Cl.⁵: **B62D 33/06**

(21) Anmeldenummer: 85114122.6

(22) Anmeldetag: 06.11.85

(54) LKW mit kippbarem Fahrerhaus.

(30) Priorität: 08.12.84 DE 3444809

(43) Veröffentlichungstag der Anmeldung:
18.06.86 Patentblatt 86/25

(45) Bekanntmachung des Hinweises auf die
Patenterteilung:
15.05.91 Patentblatt 91/20

(84) Benannte Vertragsstaaten:
AT DE FR GB IT NL SE

(56) Entgegenhaltungen:
EP-A- 0 029 880
WO-A-83/01604
DE-A- 2 340 095
FR-A- 1 439 918

(73) Patentinhaber: MAN Nutzfahrzeuge Aktiengesellschaft
Dachauer Strasse 667 Postfach 50 06 20
W-8000 München 50(DE)

(72) Erfinder: Huber, Peter
Buchenstrasse 6b
W-8044 Unterschleissheim(DE)

**Beschreibung**

Die Erfindung betrifft einen Lkw mit kippbarem Fahrerhaus gemäß dem Oberbegriff des Anspruchs 1.

Bei einem Lkw dieser Art ist an der Rückseite des Fahrerhauses beiderseits jeweils ein horizontaler Bolzen angebracht, der im wesentlichen parallel zur Fahrzeug-Längsmittelachse verläuft. Zu jedem Bolzen versetzt ist jeweils eine zu diesem achsparallele Achse vorgesehen. An der Achse ist schwenkbar ein Haken angebracht, der an seinem freien Ende eine Eingriffsfläche trägt, welche mit dem Bolzen in Eingriff bringbar ist und komplementär zu dessen Oberfläche ausgebildet ist. Am Haken ist ferner eine Verriegelungseinrichtung angebracht, mittels welcher der Bolzen arretierbar ist. Die Verriegelungseinrichtung weist ihrerseits einen Schalter auf, der mit einer Signalanzeige im Fahrerhaus verbunden ist, um den Fahrer davon in Kenntnis zu setzen, ob die Verriegelungseinrichtungen verriegelt sind oder nicht.

Zum Kippen des Fahrerhauses wird mittels einer Betätigungseinrichtung die Verriegelungseinrichtung entriegelt und der jeweilige Haken aus dem Eingriff mit dem zugehörigen Bolzen herausgeschwenkt.

Das freie Ende des Hakens ist seinerseits über eine Federung am Rahmen abgestützt, welche einen Gewichtsausgleich für das Fahrerhaus herstellt.

Der besondere Vorteil dieses bekannten Fahrerhausverschlusses liegt darin, daß er nicht nur das Kippen des Fahrerhauses gestattet bzw. das ungewollte Kippen verhindert, sondern auch das hintere Ende des Fahrzeuges in Fahrzeug-Querrichtung fixiert und somit die Längsmittelachse des Fahrerhauses auf jene des Rahmens und somit des Fahrzeuges ausrichtet. Eine solche Fixierung ist notwendig, weil sonst während der Fahrt infolge der dann auftretenden Pendelbewegungen des Fahrerhauses sehr rasch dessen Scharnieranlenkung an den Rahmen Schaden nehmen würde.

Ein solcher, jeweils aus einem Bolzen und einem Schwenkhaken gebildeter Fahrerhausverschluß hat sich infolge seiner Robustheit, seiner günstigen Bauabmessungen und der zulässigen hohen Toleranz im Lkw-Bau allgemein bewährt.

Neuere Bestrebungen im Lastwagenbau zielen auf eine möglichst vollständige Abkapselung des Antriebsmotors ab, um den durch ein Fahrzeug erzeugten Lärmpegel zu verringern. Eine solche Abkapselung vergrößert nun die seitlichen Bauabmessungen des Fahrzeugmotors ganz erheblich und macht eine aufwendige Trägerkonstruktion für den Fahrerhausverschluß erforderlich.

Da Lkw's der eingangs genannten Art in der Regel mit unterschiedlich langen Fahrerhäusern angeboten werden, ändert sich jeweils die Anbringungslage des Fahrerhausverschlusses entsprechend der jeweils gewählten Fahrerhauslänge und erfordert eine jeweils speziell ausgebildete Trägerkonstruktion für den Fahrerhausverschluß. Hierdurch wird die bereits durch die Trägerkonstruktion erschwerte Fertigung noch weiter kompliziert und erschwert.

Ausgehend von dieser Problemlage liegt der Erfindung die Aufgabe zugrunde, einen Lkw der eingangs genannten Art dahingehend weiterzubilden, daß der einfache Aufbau des Fahrerhausverschlusses selbst dann beibehalten werden kann, wenn der bisher für den Fahrerhausverschluß zur Verfügung stehende Raum anderweitig genutzt werden soll und/oder der Rahmen des Lkw wahlweise mit einem kurzen oder langen Fahrerhaus versehen werden soll.

Diese Aufgabe wird durch die Merkmale des Anspruchs 1 gelöst. Hierbei ist der im wesentlichen horizontale Bolzen (er kann auch gegenüber der Horizontalen leicht geneigt sein) nicht mehr, wie bisher, parallel zur Fahrzeug-Längsmittelachse, sondern im wesentlichen quer zu dieser angeordnet, so daß die zu jedem Bolzen im wesentlichen parallele Schwenkachse für den Haken sich ebenfalls quer zur Fahrzeug-Längsmittelachse erstreckt. Die Haken schwenken somit in einer Ebene, die sich nicht quer zur Fahrzeug-Längsmittelachse erstreckt, sondern parallel zu dieser, wobei der Schwenkweg etwa unterhalb und innerhalb der Außenkontur des Fahrerhauses verläuft. Der Bereich der Rückwand des Fahrerhauses, in welchem sich bisher die Schwenkwege der beiden Haken befanden, steht nunmehr über die gesamte Fahrerhausbreite für andere Zwecke zur Verfügung, so daß der Einbau z.B. einer Motorkapselung die einfache Anbringung des Fahrerhausverschlusses am Rahmen und Fahrerhaus in keiner Weise beeinträchtigt.

Auch bei Fahrerhäusern unterschiedlicher Länge muß nicht jeweils, wie oben angedeutet, für jede Fahrerhauslänge eine eigene Tragekonstruktion erstellt werden, sondern es ändert sich allenfalls der Punkt der Anbringung eines Trägers am Rahmen, welcher diesen mit dem Fahrerhausverschluß verbindet.

Eine zusätzliche, baulich vom eigentlichen Fahrerhausverschluß getrennte oder auch in diesen integrierte Zentriereinrichtung sorgt dafür, daß die Ausrichtung der Längsmittelachsen von Fahrerhaus und Rahmen erfolgt.

Eine solche Zentriereinrichtung kann beispielsweise von am Rahmen angebrachten, aufrechten Zapfen und diesen gegenüberliegend am Fahrerhaus angebrachten, nach unten offenen Einlauftrichtern bestehen. Es ist aber auch möglich, die beiden Bolzen gegenüber der Horizontalen leicht zueinander hin oder voneinander weg geneigt anzuordnen, so daß die Zentriereinrichtung alleine von der Lage der beiden Fahrerhausverschlüsse gebildet ist. Gemäß einer bevorzugten Ausgestaltung der Erfindung ist es jedoch von Vorteil, daß mindestens einer der Bolzen einen über seine Längenerstreckung ungleichmäßigen Querschnitt aufweist. Die Eingriffsfläche des zugehörigen Hakens ist hierbei komplementär zum jeweiligen Bolzen ausgebildet. Hierbei müssen an den Bolzen des Fahrerhauses insgesamt mindestens zwei in entgegengesetzter Richtungen weisende Vorsprünge angeordnet sein, um die Aufnahme von Querkräften zu ermöglichen. Diese Vorsprünge können an einem Bolzen alleine oder an jedem der beiden Bolzen ausgebildet sein; es ist auch möglich, einen der genannten Vorsprünge jeweilsan einem Bolzen auszubilden.

Gemäß einer bevorzugten Ausgestaltung der Erfindung weist jeder der Bolzen einen Mittelabschnitt mit kleinerem Durchmesser auf, von welchem ausgehend sich der Querschnitt eines jeden der Bolzen beiderseits des Mittelabschnittes konisch erweitert. die Konusse bilden für jede der komplementär ausgebildeten Eingriffsflächen der Haken einen zentrierenden Einlauf, wobei nach Betätigung der obengenannten Verriegelung diese durch kräftiges Zusammendrücken von Bolzen und Eingriffsfläche dafür sorgt, daß sich diese selbsttätig zentrieren.

Die Erfindung betrifft nicht nur einen Lkw der eingangs genannten Art, sondern auch einen Rahmen für einen solchen Lkw, wobei der Rahmen so eingerichtet ist, daß er wahlweise ein kurzes oder langes Fahrerhaus tragen kann.

Hierbei ist erfindungsgemäß beiderseits und an der Rückseite eines jeden Fahrerhauses ein Bolzen angebracht, der sich erfindungsgemäß quer zur Fahrzeug-Längsmittelachse erstreckt. Ein fest mit dem Fahrzeugrahmen verbundener Träger weist an seinem oberen freien Ende eine Schwenkachse auf, auf dem die Haken schwenkbar gelagert sind. Der Abstand zwischen dem Bolzen eines kurzen Fahrerhauses, wenn dieses am Rahmen angebracht ist, zur zugehörigen Achse ist gleich wie der Abstand eines Bolzens eines langen Fahrerhauses, wenn dieses am Rahmen angebracht ist, zur gleichen Achse hin. Der Bolzen des kurzen Fahrerhauses und der Bolzen des langen Fahrerhauses liegt, von der Seite des Fahrzeuges her betrachtet, jeweils genau auf einem Kreisbogen, dessen Mitte von der Achse gebildet wird. Ein und derselbe Haken, der schwenkbar am Rahmen angebracht ist, kann beim Anbau eines kurzen Fahrerhauses mit dessen Bolzen und bei Anbau eines langen Fahrerhauses mit dessen Bolzen in Eingriff gebracht werden.

Es ist daher nicht, wie bisher, erforderlich, die Anbringungsstelle des zum Rahmen gehörigen Teiles der Fahrerhausverschlüsse für langes oder kurzes Fahrerhaus an jeweils unterschiedlichen Stellen des Rahmens anzubringen. Hierdurch wird die Fertigung erheblich vereinfacht, und es ist die problemlose Umrüstung eines Fahrzeuges auf ein Fahrerhaus mit einer anderen Länge möglich.

Es ist dem Grunde nach möglich, für einen Lkw mit kurzem oder langen Fahrerhaus ein und denselben Haken in ein und derselben Einbaulage zu verwenden, wobei je nach verwendetem Fahrerhaus dessen Bolzen einmal von unten und einmal von oben durch die Eingriffsfläche des Hakens umgriffen werden. Gemäß einer bevorzugten Ausgestaltung der Erfindung ist aber der Haken so ausgebildet, daß er auf seiner Achse so umgesetzt werden kann, daß er in jedem Falle von unten her gegen den zugehörigen Bolzen schwenkt, und zwar gleichgültig, ob sich dieser Bolzen nun vor oder hinter der Achse befindet. Zu diesem Zweck genügt es, den Haken so auszubilden, daß die Mitten der Lagerbohrungen für die Achse bzw. der Eingriffsfläche auf einer gemeinsamen, die zugehörigen Achsen verbindenden Senkrechten liegen. Es ist aber auch möglich, ggf. den Haken gekröpft auszubilden, wobei beim langen oder kurzen Fahrerhaus der zum Haken zugehörige Bolzen näher an der Längsmittelachse bzw. weiter von dieser entfernt angebracht sein muß.

In jedem der genannten Fälle ändert sich die Lage der Achse relativ zum Rahmen nicht, wenn ein Fahrerhaus mit einer anderen Länge verwendet werden soll. Hierbei ist diese Achse bevorzugt an einem Träger angebracht, welcher seinerseits an einem Längsträger des Rahmens angebracht ist. Gemäß einer bevorzugten Ausgestaltung der Erfindung ist dieser Träger seinerseits so umsetzbar ausgebildet, daß er nur eine Halterung für das eine Ende einer Feder aufweist, deren anderes Ende am freien Ende des Hakens angebracht ist. Beim Umsetzen des Hakens werden somit auch die Feder und der Träger umgesetzt, so daß auch für die Abfederung des Fahrerhauses am Rahmen keine unterschiedlichen Ausbildungen für lange oder kurze Fahrerhäuser vorzunehmen sind.

Durch das Verlegen der Hebel der Fahrerhausverschlüsse aus einer Lage hinter dem Fahrerhaus quer zum Fahrzeug, wie beim Stand der Technik, in eine Lage seitlich des Fahrerhauses und in Längsrichtung des Fahrzeuges wird außerdem Baulänge für das Fahrerhaus bzw. den Nutzaufbau gewonnen.

Der Gegenstand der Erfindung wird anhand der beigefügten, schematischen Zeichnung eines bevorzugten Ausführungsbeispiels beispielsweise noch näher erläutert.

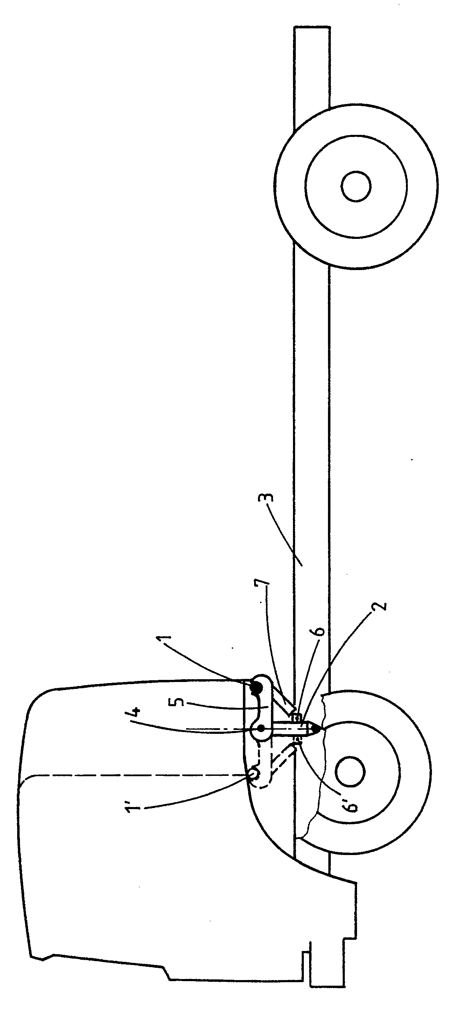

In der Zeichnung ist schematisch der Rahmen eines Lkw mit Fahrerhaus gezeigt, und zwar in ausgezogenen Linien mit einem langen und in gestrichelten Linien mit einem kurzen Fahrerhaus.

Hinten und unten am Fahrerhaus ist beiderseits dessen ein Bolzen 1 für das lange Fahrerhaus bzw. ein Bolzen 1' für das kurze Fahrerhaus angebracht.

In der Mitte zwischen den beiden Bolzen 1, 1' ist ein Träger 2 am Rahmen 3 befestigt. Der Träger 2 erstreckt sich vom Rahmen 3 zunächst schräg nach außen und dann vertikal nach oben. Im Bereich seines oberen Endes trägt er eine Achse 4. Die Mittelachsen der Bolzen 1, 1' und der Achse 4 erstrecken sich senkrecht zur Zeichenebene, welche parallel zur Fahrzeug-Längshochachse verläuft.

Ein Haken 5 ist mit seinem einen Ende schwenkbar an der Welle 4 angebracht und weist an seinem anderen Ende eine nach oben offene, den zugehörigen Bolzen 1, 1' von unten her umgreifende Eingriffsfläche auf. Ferner trägt dieses Ende des Hakens eine in der Zeichnung nicht gezeigte, lösbare Verriegelungseinrichtung.

Im unteren Bereich des Trägers 2 ist beiderseits dessen eine Federhalterung 6 bzw. 6' angebracht. Die Federhalterung 6 weist in Richtung zum Bolzen 1 für das lange Fahrerhaus, während die Federhalterung 6' zum Bolzen 1' für das kurze Fahrerhaus hinweist. Zwischen der Halterung und den die Eingriffsfläche aufweisenden Ende des Hakens 5 ist eine Druckfeder 7 angeordnet, welche das Fahrerhaus abstützt.

Durch Umsetzen des Hakens 5, das heißt durch Schwenken dieses Hakens um die strichpunktiert eingezeichnete Achse, kann der Haken in der für das jeweilige Fahrerhaus erforderlichen Lage auf die Achse 4 aufgesetzt werden.

Die beiden Bolzen 1, 1' sind mit einer mittleren Einschnürung ausgebildet; koplementär zu dieser ist die Eingriffsfläche des Hakens 5 ausgebildet. Bolzen und Eingriffsfläche liegen somit einander zentrierend aufeinander auf.

## Ansprüche

1. Lkw mit einem nach vorne kippbaren Fahrerhaus, dessen Rückseite beiderseits mittels jeweils eines lösbaren Fahrerhausverschlusses am Rahmen befestigbar ist, wobei jeder Fahrerhausverschluß einen im wesentlichen horizontalen, am Fahrerhaus angebrachten Bolzen und einen um eine am Rahmen angebrachte, zum Bolzen parallele Achse schwenkbaren Haken aufweist, dessen mit einer Eingriffsfläche gegen den Bolzen anlegbares freies Ende eine auslösbare Verriegelungseinrichtung trägt und bevorzugt mit einer das Gewicht des Fahrerhauses aufnehmenden Feder verbunden ist, dadurch gekennzeichnet, daß die Bolzen (1, 1') und Achsen (4) quer zur Fahrzeug-Längsachse verlaufen, und daß eine Zentriereinrichtung zwischen Fahrerhaus und Rahmen (3) angeordnet ist, um die Längsachsen von Fahrerhaus und Rahmen aufeinander auszurichten.

2. Lkw nach Anspruch 1, dadurch gekennzeichnet, daß mindestens einer der Bolzen über seine Längenerstreckung hinweg eine ungleichmäßige Dicke aufweist, bevorzugt jeweils einen dünnen, kreiszylindrischen Mittelabschnitt, und zwei sich von diesem aus zu dessen Enden hin konisch erweiternden Randabschnitt, und daß die jeweilige Eingriffsflächen der Haken (5) koplementär zur Form der jeweiligen Bolzen (1, 1') ausgebildet sind.

3. Rahmen für einen Lkw nach einem der Ansprüche 1 oder 2, an welchem wahlweise ein kurzes oder langes Fahrerhaus anbringbar ist, dadurch gekennzeichnet, daß der Abstand jeder Achse (4) von dem zugehörigen vorderen, an einem kurzen Fahrerhaus angebrachten Bolzen (1') ebenso groß ist wie der Abstand von dem zugehörigen, an einem langen Fahrerhaus angebrachten hinteren Bolzen (1).

4. Rahmen nach Anspruch 3, dadurch gekennzeichnet, daß die Haken (4) so geformt sind, daß sie durch Umsetzen zum Eingriff sowohl mit einem vorderen (1') als auch einem hinteren (1) Bolzen eingerichtet sind.

5. Rahmen nach einem der Ansprüche 3 oder 4, dadurch gekennzeichnet, daß die Achsen (4) jeweils an einem Träger (2) angebracht sind, der eine Halterung (6,6') für die Feder (7) trägt und seinerseits umsetzbar ausgebildet und ahgebracht ist.

## Claims

1. A Lorry with a forwardly tiltable cab, the rear of which can be secured to the frame on both sides by means of a respective releasable cab fastening, each cab fastening comprising a substantially horizontal pin mounted on the cab and a hook pivotable about a shaft mounted on the frame and parallel to the pin, and the free end of the hook - which can be placed with an engagement face against the pin - carrying a releasable locking device and preferably being connected to a spring which absorbs the weight of the cab, characterized in that the pins (1, 1') and shafts (4) extend transversely to the longitudinal axis of the vehicle, and a centring device is arranged between the cab and the frame (3), in order to align the longitudinal axes of the cab and the frame with each other.

2. A Lorry according to Claim 1, characterized in that at least one of the pins has a non-uniform thickness over its longitudinal extent, preferably in each case a thin, circular cylindrical middle portion and two edge portion[s] extending in a tapered manner therefrom towards the ends thereof, and the respective engagement faces of the hooks (5) are made complementary to the shape of the respective pins (1, 1').

3. A frame for a Larry according to one of Claims 1 or 2, on which a short or long cab can optionally be mounted, characterized in that the distance of each shaft (4) from the associated front pin (1') mounted on a short cab is equal in magnitude to the distance from the associated rear pin (1) mounted on a long cab.

4. A frame according to Claim 3, characterized in that the hooks (4) are shaped in such a way that they are adapted by reversal for engagement both with a front pin (1') and with a rear pin (1).

5. A frame according to one of Claims 3 or 4, characterized in that the shafts (4) are each mounted on a support (2) carrying a holding means (6, 6') for the spring (7) and in turn constructed and mounted so as to be reversible.

**Revendications**

1. camion avec cabine basculante vers l'avant, dont l'arrière de la cabine est fixée au châssis de chaque côté, au moyen d'un dispositif de verrouillage de cabine amovible ; chaque dispositif de verrouillage de cabine présente un goujon placé sur la cabine, sensiblement horizontale, et un crochet pivotant sur un axe placé sur le châssis, parallèle au goujon ; l'extrémité libre du crochet, qui peut s'appliquer sur une surface de prise contre les goujons, présente un dispositif de verrouillage amovible, et est relié de préférence à un ressort supportant le poids de la cabine, caractérisé en ce que les goujons (1, 1') et les axes (4) sont placés transversalement par rapport à l'axe longitudinal du véhicule, et qu'un dispositif de centrage est placé entre la cabine et le châssis (3), afin d'aligner l'un sur l'autre les axes longitudinaux de la cabine et du châssis.

2. Camion selon la revendication 1, caractérisé en ce qu'au moins un des goujons présente sur toute sa longueur une épaisseur variable, de préférence respectivement un tronçon central mince et cylindrique et, à partir de là, un tronçon en bordure conique s'évasant vers les deux extrémités, et que chacune des surfaces de prise des crochets (5) présentent une forme complémentaire vis-à-vis de celle des goujons (1,1').

3. châssis pour camion selon l'une quelconque des revendications 1 ou 2, sur lequel on place, de façon optionnelle, une cabine courte ou une cabine longue, caractérisé en ce que la distance séparant chaque axe (4) du goujon avant correspondant à une cabine courte, est la même que la distance séparant cet axe du goujon arrière correspondant à une cabine longue.

4. Châssis selon la revendication 3, caractérisé en ce que les crochets (4) ont une forme leur permettant par déplacement de s'emboîter aussi bien avec un goujon avant (1') qu'avec un goujon arrière (1).

5. Châssis selon l'une quelconque des revendications 3 ou 4, caractérisé en ce que les axes (4) sont placés respectivement sur un support (2) qui comporte une fixation (6, 6') réservée au ressort (7), et qui de son côté a été placé et conçu de façon à être déplaçable.